Europäisches Patentamt

European Patent Office

Office européen des brevets

(19)

(11) Publication number: **0 223 918**
B1

(12) # EUROPEAN PATENT SPECIFICATION

(45) Date of publication of the patent specification:
24.10.90

(51) Int. Cl.⁵: **G01N 27/00**, G01L 1/00,
H01J 37/28

(21) Application number: 86110276.2

(22) Date of filing: 25.07.86

(54) Method and atomic force microscope for imaging surfaces with atomic resolution.

(30) Priority: 26.11.85 US 802123

(43) Date of publication of application:
03.06.87 Bulletin 87/23

(45) Publication of the grant of the patent:
24.10.90 Bulletin 90/43

(84) Designated Contracting States:
BE CH DE FR GB IT LI NL SE

(56) References cited:
EP-A- 0 027 517

THE REVIEW OF SCIENTIFIC INSTRUMENTS, vol. 43,
no. 7, July 1972, pages 999-1011, New York, US; R.
YOUNG et al.: "The topografiner: an instrument for
measuring surface microtopography"
THE REVIEW OF SCIENTIFIC INSTRUMENTS, vol. 37,
no. 3, March 1966, pages 275-278, New York, US; R.D.
YOUNG: "Field Emission Ultramicrometer"
PHYSICAL REVIEW LETTERS, vol. 56, no. 9, 3rd
March 1986, pages 930-933; G. BINNIG et al.: "Atomic
force microscope"

(73) Proprietor: International Business Machines
Corporation, Old Orchard Road, Armonk, N.Y. 10504(US)

(72) Inventor: Binnig, Gerd Karl, Dr., Feldstrasse 16,
CH-8805 Richterswil(CH)

(74) Representative: Rudack, Günter O., Dipl.-Ing., IBM
Corporation Säumerstrasse 4, CH-8803 Rüschlikon(CH)

## Description

The invention relates to a method for imaging surfaces of objects with atomic resolution, and to an atomic force microscope which employs that method.

Conventional optical microscopes have a resolution limit which is determined by the aperture of the object lens, and a resolution better than about one-half the wavelength of the light used can principally not be achieved. In EP-A1-0112401, an optical near-field scanning microscope is disclosed which circumvents the resolution limit through the use of an aperture with an entrance pupil diameter that is small compared to the wavelength, and arranged at a distance from the object smaller than the wavelength. This microscope achieves a resolution on the order of one tenth of the wavelength, i.e. in the neighbourhood of 50 nm.

Electron microscopes typically have resolutions of 20 nm vertical and 1 nm lateral, but their known disadvantage is that because of the high energies of the electron beam required in achieving a high resolution, most surfaces are severely damaged.

With much smaller energies operates the scanning tunneling microscope of US-A-4,343,993. Since its operation and structure is relevant in connection with the present invention, a brief description of the scanning tunneling microscope is in order.

A very sharp metal tip is raster-scanned across the surface to be inspected at a distance so small that the electron clouds of the atoms at the apex of the tip and on the surface area closest to the tip gently touch. A so-called tunnel current then flows across the gap provided a potential difference exists between said tip and the surface. This tunnel current happens to be exponentially dependent on the distance between tip and surface, and this phenomenon is used to generate a correction signal based on the deviations from a predetermined value occurring as the tip is scanned across the surface of the probe. The correction signal is used to control the tunnel distance so as to minimize the correction signal, and to be plotted versus a position signal derived from the physical position of the tip over the surface being inspected. This technique permits a resolution down to an atomic scale, i.e. individual atoms on a surface can be made visible.

The scanning tunneling microscope requires the existence of a potential difference across the tunnel gap. Accordingly, tunnel tip and surface to be inspected either have to consist of electrically conductive material or must be coated with such material. (An insulating surface layer thinner than the tunneling length is permissible.) Thus, the scanning tunneling microscope has a natural limitation where the surface of an insulator is to be studied. Obviously, many of its details are sacrificed if a surface must first be coated with a metal layer, however thin that layer may be.

It is, therefore, an object of the invention to teach a method for imaging the surface of any material with atomic resolution, which does require neither high energies nor preparatory metal coating, or which is limited to working with electrical conductors.

It is a further object of the invention to propose an atomic force microscope with which the inventive method can be performed. The principle underlying both, the method and the microscope is based on the insight that if atoms are approached to one another so closely that their electron clouds touch, i.e. that there is a low-level overlap of the wave functions of the front atom of a sharp tip with the surface atoms of the sample to be inspected, interatomic forces occur. However, these forces are extremely small and hitherto have been very difficult to measure outside a laboratory environment and at a reasonable scanning rate. This becomes now possible with the present invention in that the interatomic forces are employed to deflect a very small spring, and the deflections of said spring are measured with a tunneling microscope.

The inventive method for imaging, i.e. generating a topographical image of a sample surface, with a resolution better than 100 nanometers is characterized by the following steps: A sharp point which is fixed to one end of a spring-like cantilever is brought so close to the surface to be inspected that the forces occurring between said point and the sample's surface are larger than $10^{-20}$N such that the resulting force deflects said cantilever. The deflection of said cantilever is detected by means of a tunnel tip arranged at tunnel distance from said cantilever. The tunnel current then flowing across the tunnel gap between said cantilever and said tunnel tip is maintained at a constant value by using any detected variations of the tunnel current to generate a correction signal. Said correction signal is used for controlling the point/sample distance such that said correction signal is minimized, and for plotting versus a scan position signal of the print with respect to the sample's surface.

The atomic force microscope of the present invention, which is capable of performing the method outlined above, comprises a sample holder designed for moving the sample in xyz-directions by steps in the nanometer range, and a tunnel system including first and second tunnel electrodes and associated electronics for measuring the distance between the said tunnel electrodes and for generating a correction signal in response to deviations of said distance from a predetermined value. This atomic force microscope is characterized in that said sample holder is arranged opposite a sharp point fixed to one end of a spring-like cantilever. The cantilever forms or carries the first one of the electrodes of said tunnel system, the second tunnel electrode being movably arranged to face said first tunnel electrode with tunneling distance. The said correction signal is applied to the sample holder for maintaining the sample/point distance constant; the correction signal is also applied to a plotter which is further connected to a source of position pulses derived from the scanning of the point across the sample's surface.

Details of preferred embodiments of the invention will hereafter be described, by way of example, with reference to the drawings in which:

Fig. 1 shows the mutual arrangement of the essential parts of the atomic force microscope of the invention;

Fig. 2 shows a preferred embodiment of the atomic force microscope of Fig. 1.

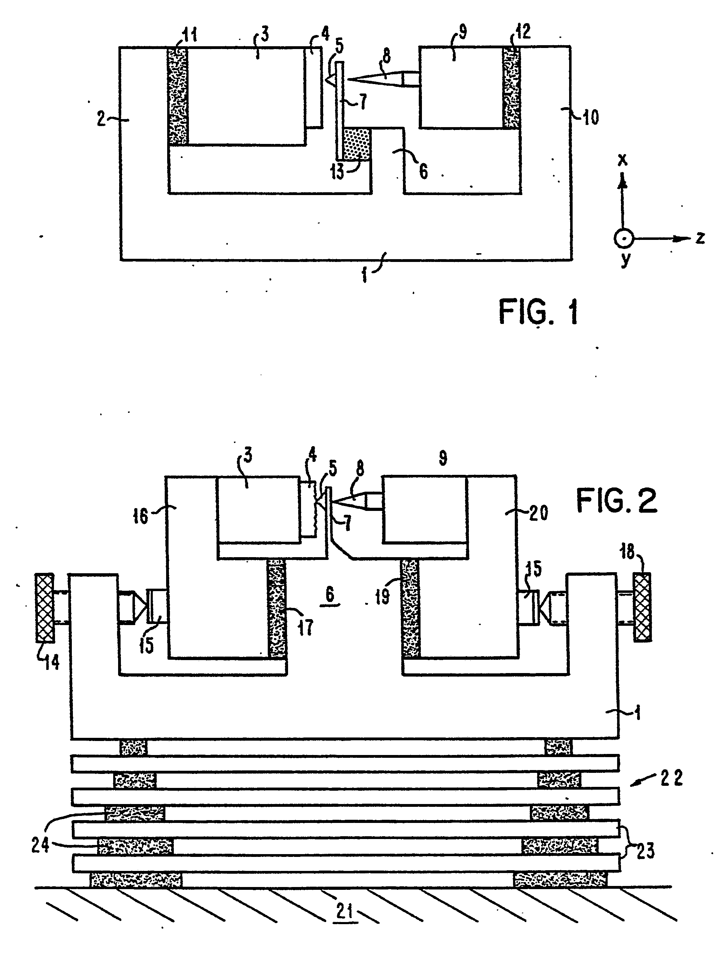

Referring to Fig. 1, the principal set up of the atomic force microscope comprises a rigid base 1 which may, for example, consist of an aluminium block. Mounted to an arm 2 of base 1 is an xyz-drive 3 which permits a sample 4 to be displaced in x, y, and z directions with respect to a stationary point 5. Said point 5 in turn is supported on an arm 6 protruding from base 1 and carrying a cantilever 7. In the preferred embodiment, cantilever 7 takes the form of a leaf spring; point 5 is fixed to the upper end of said spring 7.

Facing the back of spring 7 is a tunnel tip 8 which is supported by a z-drive 9 which permits to advance or retract tunnel tip 8 with respect to spring 7. Z-drive 9 is arranged on an arm 10 extending from base 1.

Since this instrument is intended for investigating surfaces at extreme magnifications, it is necessary to provide means for eliminating all ambient vibrations, such as building vibrations. To a certain extent, this is possible with cushions 11, 12 of viton rubber separating the drives 3 and 9 from the arms 2 and 10 of base 1.

In operation, a sample 4 to be inspected is mounted on xyz-drive 3 with its surface facing point 5. When the sample 4 is now approached to point 5 to a distance where the electron clouds of the atoms at the apex of point 5 touch the electron clouds of the atoms on the surface of sample 4, interatomic forces occur. These forces, which are repulsive, are on the order of $10^{-13}$ N and operate to deflect spring 7 to which point 5 is fixed.

Of course, in view of the smallness of the forces occurring between individual atoms, the masses of point 5 and of spring 7 should be as small as possible. Also, to permit a large deflection, the spring should be soft, but at the same time it should be reasonably insensitive against building vibrations. The strongest frequency components of building vibrations are around 100 Hz. Thus the spring/point assembly should have an eigen frequency $f_0$ much higher than 100 Hz, and this requires a very small mass.

In one experimental embodiment, with a tiny diamond stylus arranged on the smallest of springs that could be hand-made, the mass of the point/spring assembly was about $10^{-8}$ kg and the eigen frequency was found to be 2 kHz. The spring consisted of a thin gold foil of 25 μm thickness and 0,8 mm length, and an observed deflection of 40 pm corresponds to a force on the order of $10^{-10}$ N.

The deflection of spring 7 is measured by a stationary tunneling microscope. Spring 7 is supported on arm 6 by means of a piezoelectric element 13. Tunnel tip 8 is approached, by z-drive 9, to the gold spring 7 to within tunnel distance, i.e. about 0,3 nm, so that a tunnel current will flow across the gap between spring 7 and tip 8, provided a suitable potential difference exists between them. This tunnel current happens to be exponentially dependent on the distance between the tunnel electrodes. Thus, the tunnel current is a measure for the deviation of the surface elevation at the actual location of inspection from a predetermined or home level.

In its normal operation, the atomic force microscope of this invention will be used for mapping a larger part of a surface, e.g. that of a semiconductor wafer or circuit board. Accordingly, point 5 is to be scanned across the sample in a matrix fashion. If the value of the tunnel current for each spot on the sample surface is plotted versus the location information of that spot, a topographical image of the sample surface will result. The tunnel current variation resulting from the scanning of a (usually non-flat) surface is used to generate a correction signal which is applied in a feedback loop to the z-portion of xyz-drive 3 so as to control the distance between point 5 and sample 4 such that the interatomic force is maintained at a constant value.

As mentioned before, spring 7 is supported on arm 6 by means of a piezoelectric element 13. This provides the possibility of oscillating the spring in z-direction, e.g. with its eigen frequency, in one particular mode of operation which will be described later.

Fig. 2 shows a more detailed embodiment of the atomic force microscope of the present invention. The distance between point 5 and sample 4 is roughly adjustable by means of a screw 14 which bears against a viton pad 15 sitting on a member 16. The latter is supported via a viton cushion 17 by the base 1. Member 16 carries the xyz-drive 3 on which sample 4 is held. Cantilever 7 is fixed to base 1 and carries point 5 the apex of which faces sample 4. Tunnel tip 8 is rough-positioned with respect to cantilever 7 by means of a screw 18 which permits squeezing a viton cushion 19. The fine-positioning of tunnel tip 8 is accomplished by z-drive 9 which is supported on a member 20 carried by base 1 via said viton cushion 19. To eliminate as much as possible of the ambient vibrations possibly affecting bench 21 on which the atomic force microscope rests, a vibration filter 22 comprising a stack of metal plates 23 separated by rubber pads 24 of decreasing sizes (from the bottom up), as known from IBM Technical Disclosure Bulletin Vol. 27, No. 5, p. 3137.

There are four different feedback modes in operating the atomic force microscope of the present invention: In the first mode, after proper adjustment of the distances between sample 4 and point 5, and between cantilever 7 and tunnel tip 8, respectively, xyz-drive 3 is modulated to expand and retract in z-direction with an amplitude between 0,1 and 1 nanometer at the eigen frequency of cantilever 7. The interatomic force existing between the front atoms at the apex of point 5 and those on the surface of sample 4 causes cantilever 7 to oscillate. This oscillation, of course, changes the distance between cantilever 7 and tunnel tip 8, so as to modulate the tunnel current. In a feedback loop, from the modulated tunnel current a correction signal is generated which is applied to the control input of the z-section of xyz-drive 3, forcing sample 4 to be retracted.

In the second mode, cantilever 7 (Fig. 1) is excited by means of piezoelectric element 13 to oscillate in z-direction with its eigen frequency at an amplitude in the 0,01...0,1 nanometer range. The interatomic force existing at the interface between point 4 and sample 4 will cause the amplitude of the oscillation of cantilever 7 to change. From this change, a correction signal can be derived.

The third mode of feedback operation is identical with the second mode, except for the fact that here the changes in phase of the cantilever's oscillation are used to derive the correction signal.

In the fourth mode which applies in situations where a small bias force is desirable or necessary, sample 4 is slowly approached to the stationary cantilever 7 the deflection of which varies the tunnel current flowing across the gap between cantilever 7 and tunnel tip 8. Basing on the variation of the tunnel current, a control signal is derived which directly controls the z-section of xyz-drive 3. Accordingly, with decreasing distance between sample 4 and point 5, the interatomic force increases and deflects cantilever 7 which in turn causes the tunnel gap to become smaller and, hence, the tunnel current to increase. In the feedback arrangement of this mode, the increasing tunnel current operates to retract sample 4 and, thus, decrease the interatomic force, and so forth.

For certain applications it may be convenient to feedback some percentage of the control signal derived from the tunnel current variation to the z-drive 9 to directly contribute to the controlling of the tunneling microscope. In this case, sample 4 and tunnel tip 8 are driven in opposite directions, tunnel tip 8, however, a factor 10, 100 or 1000, for example, less in amplitude. The attention of the practitioners of this invention should be drawn to the fact that in contrast to the above-described first through third feedback modes, in the fourth mode the absolute value of the interatomic force is only well defined at the beginning of the measurement when a certain deflection of cantilever 7 is adjusted. After a while, the deflection may become undefined because of thermal drift.

As mentioned above, sample 4 is supported on xyz-drive 3, the z-section being used to fine-adjust the distance between sample 4 and point 5. The xy-sections of xyz-drive 3 are used for displacing sample 4 in its xy-plane with respect to point 5. The displacement is controlled so that point 5 performs a raster scan of the surface of sample 4. The raster scan control signal is, hence, representative of the position, in the xy-plane, of point 5 over sample 4. Plotting the raster scan signal versus the feedback or correction signal mentioned above yields an image of the topography of the surface of sample 4.

In an embodiment in accordance with Fig. 2 operated under the conditions of mode 4, a vertical resolution of 0,1 nanometer and a lateral resolution of 3 nanometers was achieved, although the measurement was conducted in air. It may be mentioned that in air all surfaces tend to be covered with a thin film of water, and this might require a certain minimum force for point 5 to be able to transit that wafer film.

It will be clear to those skilled in the art that placing the atomic force microscope of the present invention in an ultra-high vacuum environment will improve the stability and resolving power of the instrument by at least two orders of magnitude.

## Claims

1. Method for generating a topographical image of a sample surface with a resolution better than 100 nm, characterized by the following steps:
- bringing a sharp point (5) which is fixed to one end of a spring-like cantilever (7) so close to the surface of the sample (4) to be inspected that the forces occurring between the atoms at the apex of said point (5) and on the sample's surface are larger than $10^{-20}N$ such that the resulting force deflects said cantilever (7);
- detecting the deflection of said cantilever (7) by means of a tunnel tip (8) arranged at tunnel distance from said cantilever (7);
- maintaining the tunnel current flowing across the tunnel gap between said cantilever (7) and said tunnel tip (8) at a constant value by using any detected variations of the tunnel current to generate a correction signal;
- using said correction signal for controlling the point/sample distance such that said correction signal is minimized, and for plotting versus a scan position signal representative of the current position of the point (5) with respect to the sample (4).

2. Method in accordance with claim 1, characterized in that the sample (4) is oscillated in z-direction by way of appropriately modulating the xyz-drive (3) on which it is held, at the eigen frequency of said cantilever (7) and with an amplitude between 0,1 and 1 nanometer, such that the cantilever (7) is caused to oscillate and thus modulate the tunnel current.

3. Method in accordance with claim 1, characterized in that said cantilever (7) is excited to oscillate in z-direction at an amplitude in the 0,01....0,1 nanometer range, and that an additional correction signal is derived from the changes of the said amplitude occurring as the sample (4) is scanned.

4. Method in accordance with claim 1, characterized in that said cantilever (7) is excited by means of a piezoelectric element (13) to which it is attached, to oscillate in z-direction at an amplitude in the 0,01...0,1 nanometer range, and that an additional correction signal is derived from the changes of the phase of the cantilever's oscillation occurring as the sample (4) is scanned.

5. Method in accordance with claim 1, characterized in that a predetermined percentage of said correction signal is fed back to the control mechanism (9) for the tunnel tip (8) while some other predetermined percentage of said correction signal is applied to the control mechanism (3) for the sample holder (3), such that the sample (4) and the tunnel tip (8) are driven in opposite directions for distance correction.

6. Atomic force microscope for performing the method of claim 1, and comprising a sample holder designed for moving the sample in xyz-directions by steps in the nanometer range, and a tunnel system including first and second tunnel electrodes and associated electronics for measuring the distance between said tunnel electrodes and for generating a correction signal in response to deviations of said distance from a predetermined value, characterized in that said sample holder (3) is arranged opposite a sharp point (5) fixed to one end of a spring-like cantilever (7) which forms/carries the first one of the electrodes of said tunnel system, the second tunnel electrode (8) being movably arranged to face said first tunnel electrode (7) with tunneling distance, said correction signal being applied to said sample holder (3) for maintaining the sample/point distance constant, said correction signal alos being applied to a graphic display unit which is further connected to a source of position signals derived from the scanning of said point (5) across the surface of the sample (4).

7. Microscope in accordance with claim 6, characterized in that said point (5) consists of a diamond needle attached to said cantilever (7).

8. Microscope in accordance with claim 6, characterized in that said cantilever (7) is fixed to a part (6) of a base (1) with a piezoelectric element (13) arranged between said cantilever (7) and said part (6).

9. Microscope in accordance with claim 6, characterized in that said sample holder (3) is supported by a base (1, 2) by means of a vibration damping cushion (11, 17).

10. Microscope in accordance with claim 9, characterized in that the sample holder (3) is attached to a supporting member (16) which in turn is fixed to said vibration damping cushion (17), and that a screw (14) is provided for coarse adjustment of said sample (4) with respect to said point (5) in z-direction, by way of moving said supporting member (16) against the resistence of said cushion (17).

11. Microscope in accordance with claim 6, characterized in that said cantilever (7) is with one end rigidly connected to a common base (1) which also carries, by means of interposed vibration damping cushions (17, 19), supporting members (16, 20) respectively supporting an xyz-drive and sample holder (3) and a z-drive and tunnel tip support (9).

12. Microscope in accordance with claim 6, characterized in that said cantilever (7) is electrically conductive on its side facing said tunnel tip (8) and that an electrical potential difference is maintained between said tunnel tip (8) and the side of the cantilever (7) which it faces.

13. Microscope in accordance with claim 6, characterized in that said cantilever (7) consists of a gold foil of about 25 micrometer thickness.

**Patentansprüche**

1. Verfahren zum Erzeugen eines topographischen Bildes einer Probenoberläche mit einer Auflösung besser als 100 nm, gekennzeichnet durch die folgenden Schritte:
   - Annähern einer spitzen, an einem Ende mit einem federartigen Ausleger (7) verbundenen Spitze (5) so nahe an die Oberläche der zu untersuchenden Probe (4), daß die zwischen den Atomen am Scheitel der Spitze (5) und auf der Probeno-

berläche auftretenden Kräfte größer als $10^{-20}$ N sind, so daß die resultierende Kraft den Ausleger (7) auslenkt;
   - Abtasten der Auslenkung des Auslegers (7) mittels einer Tunnelspitze (8), die im Tunnelabstand von dem genannten Ausleger (7) angeordnetist;
   - Konstanthalten des über den Tunnelspalt zwischen dem Ausleger (7) und der Tunnelspitze (8) fließenden Tunnelstroms durch Verwenden der festgestellten Änderungen des Tunnelstroms zum Erzeugen eines Korrektursignals;
   - Verwenden des genannten Korrektursignals zum Steuern des Abstandes zwischen Spitze und Probe so, daß das Korrektursignal ein Minimum hat, und zum Aufzeichnen über einem Abtastort-Signal, das die aktuelle Position der Spitze (5) bezüglich der Probe (4) angibt.

2. Verfahren gemäß Anspruch 1, dadurch gekennzeichnet, daß die Probe (4) mittels eines entsprechend modulierten xyz-Antriebs (3), auf dem sie angeordnet ist, in z-Richtung mit der Eigenfrequenz des Auslegers (7) und mit einer Amplitude im Bereich zwischen 0,01 und 0,1 nm zum Schwingen gebracht wird, um so den Tunnelstrom zu modulieren.

3. Verfahren gemäß Anspruch 1, dadurch gekennzeichnet, daß der Ausleger (7) angeregt wird, mit einer Amplitude im Bereich von 0,01 bis 0,1 nm in z-Richtung zu schwingen, und daß während der Abtastung der Probe (4) ein zusätzliches Korrektursignal aus den auftretenden Änderungen der Amplitude abgeleitet wird.

4. Verfahren gemäß Anspruch 1, dadurch gekennzeichnet, daß der Ausleger (7) mittels eines piezoelektrischen Wandlers (13), an den er angebaut ist, angeregt wird, mit einer Amplitude im Bereich zwischen 0,01 und 0,1 nm zu schwingen, und daß während der Abtastung der Probe (4) ein zusätzliches Korrektursignal aus den Änderungen der Phase der Schwingung des Auslegers (7) abgeleitet wird.

5. Verfahren gemäß Anspruch 1, dadurch, gekennzeichnet, daß ein vorbestimmter Prozentsatz des Korrektursignals an den Steuermechanismus (9) für die Tunnelspitze (8) rückgekoppelt wird, während ein anderer vorbestimmter Prozentsatz des Korrektursignals an die Steuervorrichtung (3) für den Probenhalter angelegt wird, so daß die Probe (4) und die Tunnelspitze (8) für die Abstandskorrektur in entgegengesetzte Richtungen bewegt werden.

6. Mit atomaren Kräften arbeitendes Mikroskop zum Ausführen des Verfahrens gemäß Anspruch 1, mit einem für die Bewegung der Probe in xyz-Richtungen in Schritten im Nanometer-Bereich ausgelegten Probenhalter und mit einem Tunnelsystem mit erster und zweiter Tunnelelektrode und zugehöriger Elektronik für das Messen des Abstandes zwischen den Tunnelelektroden und zum Erzeugen eines aus den Abweichungen des Abstandes von einem vorgegebenen Wert abgeleiteten Korrektursignals, dadurch gekennzeichnet, daß der genannte Probenhalter (30) gegenüber einer spitzen, an einem Ende eines federarmigen Auslegers (7) befestigten Spitze (5) angeordnet ist, der die erste der Elektroden des Tunnelsystems bildet/trägt, während die zweite Elektrode (8) in Tunnelabstand beweglich der genannten ersten Elektrode (7) gegenüber angeordnet ist, wobei das genannte Korrektursignal dem genannten Probenhalter (3) zugeführt wird, um den Probe/Spitze-Abstand konstant zu halten, und wobei das Korrektursignal einer graphischen Anzeigevorrichtung zugeführt wird, die ferner mit einer Quelle für Positionssignale verbunden ist, die aus der Abtastung der Oberfläche der Probe (4) it der genannten Spitze (5) abgeleitet sind.

7. Mikroskop gemäß Anspruch 6, dadurch gekennzeichnet, daß die genannte Spitze (5) aus einer an dem genannten Ausleger (7) befestigten Diamantnadel besteht.

8. Mikroskop gemäß Anspruch 6, dadurch gekennzeichnet, daß der genannte Ausleger (7) an einem Teil (6) einer Basis (1) befestigt ist, wobei zwischen dem Ausleger (7) und dem genannten Teil (6) ein piezoelektrisches Element (13) angeordnet ist.

9. Mikroskop gemäß Anspruch 6, dadurch gekennzeichnet, daß der genannte Probenhalter (3) mittels eines vibrationsdämpfenden Kissens (11, 17) von einer Basis (1, 2) getragen wird.

10. Mikroskop gemäß Anspruch 6, dadurch gekennzeichnet, daß der genannte Probenhalter (3) an einem Träger (16) angeordnet ist, der seinerseits an einem vibrationsdämpfenden Kissen (11, 17) befestigt ist, und daß für die Grobeinstellung der Probe (4) in z-Richtung bezüglich der Spitze (5) eine Schraube (14) vorgesehen ist, wobei der Träger (16) gegen den Widerstand des genannten Kissens (17) bewegt wird.

11. Mikroskop gemäß Anspruch 6, dadurch gekennzeichnet, daß der genannte Ausleger (7) mit einem Ende starr mit einer gemeinsamen Basis (1) verbunden ist, die über dazwischenliegende vibrationsdämpfende Kissen (11, 19) Trägerelemente (16, 20) trägt, die den xyz-Antrieb und Probenhalter (3) bzw. den Support (9) Tunnelspitze (5) tragen.

12. Mikroskop gemäß Anspruch 6, dadurch gekennzeichnet, daß der genannte Ausleger (7) auf der der Tunnelspitze (8) zugewandten Seite elektrisch leitend ist, und daß eine elektrische Potentialdifferenz zwischen der Tunnelspitze (8) und der ihr zugewandten Seite des Auslegers (7) aufrechterhalten wird.

13. Mikroskop gemäß Anspruch 6, dadurch gekennzeichnet, daß der genannte Ausleger (7) aus einer Goldfolie mit einer Dicke von etwa 25 Mikrometer besteht.

**Revendications**

1. Procédé de production d'une image topographique d'une surface échantillon avec une résolution meilleure que 100 nm, caractérisé par les étapes suivantes :
   – amener une pointe éffilée (5) qui est fixée à une extrémité d'une pièce en porte à faux formant ressort (7) suffisamment près de la surface de l'échantillon (4) à inspecter pour que les forces apparaissant entre les atomes au sommet de ladite pointe (5) et sur la surface de l'échantillon sont supérieures à $10^{-20}$ N de sorte que la force résultante défléchisse la pièce en porte à faux (7);
   – détecter la déflexion de la pièce en porte à faux (7) au moyen d'une extrémité d'effet tunnel (8) disposée à une distance d'effet tunnel de la pièce en porte à faux (7);
   – maintenir le courant d'effet tunnel circulant dans l'intervalle d'effet tunnel entre la pièce en porte à faux (7) et l'extrémité d'effet tunnel (8) à une valeur constante en utilisant toute variation détectée du courant d'effet tunnel pour produire un signal de correction;
   – utiliser le signal de correction pour commander la distance pointe/échantillon de sorte que le signal de correction soit rendu minimal, et pour tracer cette distance en fonction d'un signal de correction de position d'analyse représentatif de la position en cours de la pointe (5) par rapport à l'échantillon (4).

2. Procédé selon la revendication 1, caractérisé en ce que l'échantillon (4) est amené à osciller dans la direction z par modulation appropriée de l'entraînement xyz (3) sur lequel il est porté, à la fréquence propre de la pièce en porte à faux (7) et avec une amplitude comprise entre 0,1 et 1 nanomètre, de sorte que la pièce en porte à faux (7) soit amenée à osciller et donc à moduler le courant d'effet tunnel.

3. Procédé selon la revendication 1, caractérisé en ce que la pièce en porte à faux (7) est excitée pour osciller dans la direction z à une amplitude dans la plage de 0,01 à 0,1 nm, et en ce qu'un signal de correction supplémentaire est fourni à partir des changements de ladite amplitude survenant quand l'échantillon (4) est balayé.

4. Procédé selon la revendication 1, caractérisé en ce que la pièce en porte à faux (7) est excitée au moyen d'un élément piézoélectrique (13) auquel elle est fixée, pour osciller dans la direction z à une amplitude dans la gamme de 0,01 à 0,1 nanomètre et en ce qu'un signal de correction supplémentaire est fourni à partir des changements de phase de l'oscillation dans la pièce en porte à faux survenant quand l'échantillon (4) est balayé.

5. Procédé selon la revendication 1, caractérisé en ce qu'un pourcentage prédéterminé du signal de correction est renvoyé au mécanisme de contrôle (9) pour la tige d'effet tunnel (8) tandis qu'un autre pourcentage prédéterminé du signal de correction est appliqué au mécanisme de commande (3) du support d'échantillon, de sorte que l'échantillon (4) et la tige d'effet tunnel (8) sont entraînés en direction opposée pour une correction de distance.

6. Microscope à force d'interaction atomique pour mettre en œuvre le procédé de la revendication 1, et comprenant un support d'échantillon prévu pour déplacer l'échantillon dans les directions xyz par paliers dans la gamme du nanomètre, et un système à effet tunnel comprenant des première et seconde électrodes effet tunnel et des circuits électroniques associés pour mesurer la distance entre les électrodes à effet tunnel et pour produire un signal de correction en réponse aux variations de ladite distance par rapport à une valeur prédéterminée, caractérisé en ce que le support d'échantillon (3) est disposé en face d'une pointe éfilée (5) fixé à une extrémité d'une pièce en porte à faux formant ressort (7) qui forme/porte la première des électrodes du système à effet tunnel, la seconde électrode à effet tunnel (8) étant placée de façon déplaçable en face de la première électrode à effet tunnel (7) à une distance d'effet tunnel, le signal de correction étant appliqué au support d'échantillon (3) pour maintenir constante la distance échnatillon/pointe, le signal de correction étant appliqué à un module d'affichage graphique qui est en outre connecté à une source de signaux de position obtenus à partir du balayage de ladite pointe (5) sur la surface de l'échantillon (4).

7. Microscope selon la revendication 6, caractérisé en ce que ladite pointe (5) consiste en une aiguille en diamant fixée à la pièce en porte à faux (7).

8. Microscope selon la revendication 6, caractérisé en ce que ladite pièce en porte à faux (7) est fixée à une partie (6) d'un support (1) par un élément piézoélectrique (13) disposé entre la pièce en porte à faux (7) et ladite partie (6).

9. Microscope selon la revendication 6, caractérisé en ce que le support d'échantillon (3) est supporté par un support (1, 2) par l'intermédiaire d'un amortisseur de vibration (11, 17).

10 Microscope selon la revendication 9, caractérisé en ce que le support d'échantillon (3) est fixé à un élément support (16) qui est lui-même fixé à l'amortisseur de vibration (17), et en ce qu'une vis (14) est prévue pour un réglage grossier de l'échantillon (4) par rapport à la pointe (5) dans la direction z, par déplacement dudit élément support (16) à l'encontre de la résistance de l'amortisseur (17).

11. Microscope selon la revendication 6, caractérisé en ce que la pièce en porte à faux (7) est reliée rigidement par une extrémité à un support commun (1) qui porte également, par l'intermédiaire d'amortisseurs de vibration interposés (17, 19), des éléments supports (16, 20) soutenant respectivement un support d'entraînement xyz et d'échantillon (3) et un support (9) d'entraînement en z et d'extrémité d'effet tunnel.

12. Microscope selon la revendication 6, caractérisé en ce que la pièce en porte à faux (7) est électriquement conductrice de son côté tourné vers l'extrémité d'effet tunnel (8) et en ce qu'une différence de potentiel électrique est maintenue entre l'extrémité d'effet tunnel (8) et le côté de la pièce en porte à faux (7) qui lui fait face.

13. Microscope selon la revendication 6, caractérisé en ce que la pièce en porte à faux (7) consiste en une feuille d'or d'une épaisseur d'environ 25 micromètres.

FIG. 1

FIG. 2